# EUROPEAN PATENT APPLICATION

(11) **EP 2 647 666 A1**
(43) Date of publication of application: **09.10.2013**
(21) Application number: 12163359.8
(22) Date of filing: 05.04.2012
(51) Int. Cl.: C08L 59/00, B29C 45/46, B32B 27/00, C08J 5/06, C08K 5/00, H01B 1/24

(54) **Tribologically modified polyoxymethylene**

(71) Applicant: Ticona GmbH, 65843 Sulzbach (Taunus) (DE)
(72) Inventor: Jünger, Oliver, 55128 Mainz (DE); Markgraf, Kirsten, 69469 Weinheim (DE)
(74) Representative: Zimmermann & Partner

(57) **Abstract**

Disclosed is a tribologically modified molding composition, a method for the manufacturing of molded article by melt mixing said molding composition, molded article obtainable therefrom as well as the use of the molding composition for the manufacturing of molded parts used in the automotive industry or for housings, latches, window winding systems, wiper systems, pulleys, sun roof systems, seat adjustments, levers, gears, claws, pivot housings, wiper arms, brackets or seat rails bearings, gears, cams, rollers, sliding elements such as sliding plates, conveyer belt parts such as chain elements and links, castors, fasteners, levers, conveyor system wear strips and guard rails.

## Description

The present invention relates to a tribologically modified molding composition, a method for the manufacturing of molded article by melt mixing said molding composition, molded article obtainable therefrom as well as the use of the molding composition for the manufacturing of molded parts used in the automotive industry or for housings, latches, window winding systems, wiper systems, pulleys, sun roof systems, seat adjustments, levers, gears, claws, pivot housings, wiper arms, brackets or seat rails bearings, gears, cams, rollers, sliding elements such as sliding plates, conveyer belt parts such as chain elements and links, castors, fasteners, levers, conveyor system wear strips and guard rails.

Polyacetal polymers, which are commonly referred to as polyoxymethylenes (POMs), have been established as exceptionally useful engineering materials in a variety of applications. Polyoxymethylene polymers are widely used in constructing molded parts, such as parts for use in the automotive industry and the electrical industry. Polyoxymethylene polymers, for instance, have excellent mechanical properties, fatigue resistance, abrasion resistance, chemical resistance, and moldability.

The superior mechanical properties of polyoxymethylene (POM) molding compositions are the reason for their use in numerous applications. To improve their properties, the polyoxymethylene homo- and -copolymers are provided with additives to adapt the properties to the application, for example by using reinforcing fibers.

In the past, polyoxymethylene polymers have been combined with a tribological modifier for producing polymer compositions well suited for use in tribological applications where the polymer article is in moving contact with metal parts or other plastic parts. For instance, tribological applications can include embodiments where the polyoxymethylene polymer is formed into gear wheels, pulleys or sliding elements, such as window panes. Of particular advantage, polyoxymethylene polymers when used in tribological applications have a low coefficient of friction and therefore generate very little frictional noise while also experiencing low wear.

Polyoxymethylene compositions that are formulated for tribological applications, for instance, are disclosed in U.S. Patent Application Publication No. U.S. 2007/0105989, which is incorporated herein by reference.

It is known to use high molecular weight polyolefins as lubricants to improve the wear resistance of polyoxymethylene resins. For example, United States Patent No. 5,482,987 discloses self-lubricating, low wear compositions containing from about 70 to about 99.5 weight percent of a thermoplastic polymer, e.g., polyoxymethylene, and 0.5 to 30 weight percent of a lubricating system comprising a high molecular weight polyethylene, a high density polyethylene, and other components as therein more particularly described; said high molecular weight polyethylene being further described as exhibiting a molecular weight of at least about 500,000, a density of at least about 0.94 g/cm³, and what is therein termed a mold flow index (MFI) of from about 0.4 to about 2.2 g/10 minutes, and said high density polyethylene being further described as exhibiting a density of about 0.95 g/cm³ and a MFI of about 3.0 g/10 minutes. United States Patent No. 5,641,824 discloses a self lubricating melt blend of from about 70 to about 99.5 weight percent of a thermoplastic polymer, e.g., polyoxymethylene, and from about 0.5 to 30 weight percent of a lubricating system containing ultra high molecular weight polyethylene having a weight-average molecular weight of at least about 3 x 10⁶, typically from about 5 x 10⁶ to about 6 x 10⁶, together with other components as therein more particularly described. The ultra high molecular weight polyethylene component of the compositions disclosed by United States Patent No. 5,641,824 is further described as having an intrinsic viscosity of at least about 28 dl/g and a specific gravity of about 0.93g/cm³.

The use of ultra high molecular weight polyethylene as an additive in polyoxymethyene compositions is also disclosed by JP 01 126359A and US 200301481 17. More specifically, JP 01 126359A discloses a blend of 100 parts by weight polyacetal, 1 to 6 parts by weight of oil and/or wax and 1 to 15 parts by weight of ultra high molecular weight polyethylene having a particle diameter of less than or equal to 30 µm. US 20030148117 discloses a polyacetal resin composition comprising a polyacetal resin having a melt index of 3.0 or less and, based on the weight of the composition: 0.05 to 3.0 wt % of silicone oil, 0.1 to 5.0 wt % of an elastomer, and 0.1 to 5.0 wt % of ultra high molecular weight polyethylene; the ultra high molecular weight polyethylene component is said to have a weight average molecular weight of not lower than about 1,000,000 and a preferred average particle diameter of 15 to 150 µm.

EP 498620A discloses a colored polyacetal resin composition comprising: (A) 100 parts by weight of a polyacetal resin, (B) 0.1 to 30 parts by weight, in terms of carbon black, of a substantially uniform dispersion of a carbon black integrated into an ethylenic polymer, the amount of the said polymer being 0.3 to 8 times that of the carbon black, (C) 0.01 to 5 parts by weight of one or more compounds selected from among nitrogen compounds, fatty acid esters and metal compounds consisting of hydroxides, inorganic acid salts and carboxylates of alkali metals and alkaline earth metals, and (D) 0.01 to 5 parts by weight of a hindered phenolic compound. EP 498620A discloses the following materials as suitable for use as the polyethylene component of the compositions therein described: low-density polyethylene, high-density polyethylene, ethylene vinyl acetate copolymers, ethylene-acrylic ester copolymers, ethylene-α-olefin copolymers, modified ethylene copolymers, and polyethylene wax. United States Patent No. 6,046,141 and PCT/US2005/024413 discloses the use of ultrahigh molecular polyethylene as one of many additional optional processing aids that may be present in molding compositions comprising from about 95 to 99.9 parts by weight of a thermoplastic selected from the class consisting of polyacetals, polyesters, and polyamides and from about 0.1 to 5 parts by weight of an oxidized polyethylene wax.

While the addition of high molecular weight polyethylene is known to improve many of the wear characteristics of polyoxymethylenes, parts made from blends of polyoxymethylene and high molecular weight polyethylene commonly have a less than desirable surface appearance. More particularly, such blends commonly exhibit pitting, surface roughness, blotches, striations, and/or splaying, defects that may limit their use in applications where surface appearance is important. Without wishing to be bound to theory, some of these surface defects may be indications of blend delamination. In addition to contributing to surface defects, delamination may, in some instances, detract from the wear properties of the blends.

A polyoxymethylene composition that has both good wear properties and good surface appearance is desired.

Although modified polyoxymethylene compositions have been found to be well suited in tribological applications, further improvements are needed. In particular, a need exists for a polyoxymethylene composition well suited for use in tribological applications that has improved wear properties.

The object of the present invention is the provision of a molding composition which demonstrates lower wear and better sliding properties as well as an improved appearance.

It has surprisingly been found that molding compositions comprising a polyoxymethylene and a hydrophilized ultrahigh molecular weight polyethylene (UHMW-PE) lead to a molding composition which has excellent mechanical properties and especially low wear as well as excellent sliding properties which are required for many applications especially in the automotive industry where the molding composition is formed into gear wheels, pulleys or sliding elements, such as window panes. Of particular advantage, polyoxymethylene polymers when used in tribological applications have a low coefficient of friction and therefore generate very little frictional noise while also experiencing low wear and an excellent appearance.

An embodiment of the present invention is a molding composition comprising
a) polyoxymethylene (A) and
b) hydrophilized ultra high molecular weight polyethylene (B).

### Component (A)

The molding composition according to the present invention comprises at least one polyoxymethylene (A) (hereinafter also referred to as "component (A)"). Component (A) of the molding composition according to the invention is a polyoxymethylene homo- or -copolymer.

It has surprisingly found that polyoxymethylenes having an increased number of hydroxyl group even demonstrate a further improved wear, i.e. a lower wear rate.

Preferably, the polyoxymethylene (A) has a high content of terminal hydroxyl groups and more preferably contains no low molecular weight constituents or only a small proportion thereof. Polyoxymethylene (A) preferably has terminal hydroxyl groups, for example hydroxyethylene groups (-OCH₂CH₂-OH) and hemiacetal groups (-OCH₂-OH). According to a preferred embodiment, at least 25 %, preferably at least 50 %, more preferably at least 75 % of the terminal groups of the polyoxymethylene (A) are hydroxyl groups, especially hydroxyethylene groups.

The content of hydroxyl groups end groups is especially preferred at least 80 %, based on all terminal groups. Within the meaning of the present invention, the term "all terminal groups" is to be understood as meaning all terminal and - if present - all side terminal groups.

In addition to the terminal hydroxyl groups, the POM may also have other terminal groups usual for these polymers. Examples of these are alkoxy groups, formate groups, acetate groups or aldehyde groups. According to a preferred embodiment of the present invention the polyoxymethylene (A) is a homo- or copolymer which comprises at least 50 mol-%, preferably at least 75 mol-%, more preferably at least 90 mol-% and most preferably at least 95 mol-% of - CH₂O-repeat units.

It has been found that molding compositions which demonstrate an extremely high impact resistance can be obtained with a polyoxymethylene (A) which has low molecular weight constituents having molecular weights below 10,000 Dalton of less than 15 % by weight, preferably less than 10 % by weight, more preferably less than 7 % by weight and most preferably less than 5 % by weight, based on the total mass of the polyoxymethylene.

The "POM polymers" which can be used as polyoxymethylene (A) generally have a melt volume rate MVR of less than 50 cm³/10 min, preferably ranging from 1 to 50 cm³/10 min, further preferably ranging from 1 to 20 cm³/10 min, more preferably ranging from 2 to 15 cm³/10 min and especially ranging from 4 to 13 or 4 to 10 cm³/10 min, determined according to ISO 1133 at 190 °C and 2.16 kg.

Preferably, polyoxymethylene (A) has a content of terminal hydroxyl groups of at least 4 mmol/kg, preferably at least 10 mmol/kg, more preferably at least 15 mmol/kg and most preferably ranging from 15 to 50 mmol/kg, especially from 18 to 40 mmol/kg, more expecially 20 to 30 mmol/kg.

The content of terminal hydroxyl groups can be determined as described in K. Kawaguchi, E. Masuda, Y. Tajima, Journal of Applied Polymer Science, Vol. 107, 667-673 (2008).

The preparation of the polyoxymethylene (A) can be carried out by polymerization of polyoxymethylene-forming monomers, such as trioxane or a mixture of trioxane and dioxolane, in the presence of ethylene glycol as a molecular weight regulator. The polymerization can be effected as precipitation polymerization or in particular in the melt. Initiators which may be used are the compounds known per se, such as trifluoromethane sulfonic acid, these preferably being added as solution in ethylene glycol to the monomer. The procedure and termination of the polymerization and working-up of the product obtained can be effected according to processes known per se. By a suitable choice of the polymerization parameters, such as duration of polymerization or amount of molecular weight regulator, the molecular weight and hence the MVR value of the resulting polymer can be adjusted. The criteria for choice in this respect are known to the person skilled in the art. The above-described procedure for the polymerization leads as a rule to polymers having comparatively small proportions of low molecular weight constituents. If a further reduction in the content of low molecular weight constituents were to be desired or required, this can be affected by separating off the low molecular weight fractions of the polymer after the deactivation and the degradation of the unstable fractions after treatment with a basic protic solvent.

This may be a fractional precipitation from a solution of the stabilized polymer, polymer fractions of different molecular weight distribution being obtained.

Preference is also given to polyoxymethylene (A) which also is obtainable by polymerizing polyoxymethylene forming monomers in the presence of heteropoly acids.

In one embodiment, a polyoxymethylene polymer with hydroxyl terminal groups can be produced using a cationic polymerization process followed by solution hydrolysis to remove any unstable end groups. During cationic polymerization, a glycol, such as ethylene glycol can be used as a chain terminating agent. The cationic polymerization results in a bimodal molecular weight distribution containing low molecular weight constituents. In one embodiment, the low molecular weight constituents can be significantly reduced by conducting the polymerization using a heteropoly acid such as phosphotungstic acid as the catalyst. When using a heteropoly acid as the catalyst, for instance, the amount of low molecular weight constituents can be less than 2% by weight.

The heteropoly acid is a generic term for polyacids formed by the condensation of different kinds of oxo acids through dehydration and contains a mono- or polynuclear complex ion wherein a hetero element is present in the center and the oxo acid residues are condensed through oxygen atoms. Such a heteropoly acid is represented by the formula:

Hₓ[MₘM'ₙO_{z}]_{y}H₂O

wherein
M represents an element selected from the group consisting of P, Si, Ge, Sn, As, Sb, U, Mn, Re, Cu, Ni, Ti, Co, Fe, Cr, Th and Ce,
M' represents an element selected from the group consisting of W, Mo, V and Nb,
m is 1 to 10,
n is 6 to 40,
z is 10 to 100,
x is an integer of 1 or above, and
y is 0 to 50.

The central element (M) in the formula described above may be composed of one or more kinds of elements selected from P and Si and the coordinate element (M') is composed of at least one element selected from W, Mo and V, particularly W or Mo.

Specific examples of heteropoly acids are selected from the group consisting of phosphomolybdic acid, phosphotungstic acid, phosphomolybdotungstic acid, phosphomolybdovanadic acid, phosphomolybdotungstovanadic acid, phosphotungstovanadic acid, silicotungstic acid, silicomolybdic acid, silicomolybdotungstic acid, silicomolybdotungstovanadic acid and acid salts thereof.

Excellent results have been achieved with heteropoly acids selected from 12-molybdophosphoric acid (H₃PMo₁₂O₄₀) and 12-tungstophosphoric acid (H₃PW₁₂O₄₀) and mixtures thereof.

The heteropoly acid may be dissolved in an alkyl ester of a polybasic carboxylic acid. It has been found that alkyl esters of polybasic carboxylic acid are effective to dissolve the heteropoly acids or salts thereof at room temperature (25°C).

The alkyl ester of the polybasic carboxylic acid can easily be separated from the production stream since no azeotropic mixtures are formed. Additionally, the alkyl ester of the polybasic carboxylic acid used to dissolve the heteropoly acid or an acid salt thereof fulfils the safety aspects and environmental aspects and, moreover, is inert under the conditions for the manufacturing of oxymethylene polymers.

Preferably the alkyl ester of a polybasic carboxylic acid is an alkyl ester of an aliphatic dicarboxylic acid of the formula:

(ROOC)-(CH₂)ₙ-(COOR')

wherein
n is an integer from 2 to 12, preferably 3 to 6 and
R and R' represent independently from each other an alkyl group having 1 to 4 carbon atoms, preferably selected from the group consisting of methyl, ethyl, n-propyl, iso-propyl, n-butyl, iso-butyl and tert.-butyl.

In one embodiment, the polybasic carboxylic acid comprises the dimethyl or diethyl ester of the above-mentioned formula, such as a dimethyl adipate (DMA).

The alkyl ester of the polybasic carboxylic acid may also be represented by the following formula:

(ROOC)₂-CH-(CH₂)ₘ-CH-(COOR')₂

wherein
m is an integer from 0 to 10, preferably from 2 to 4 and
R and R' are independently from each other alkyl groups having 1 to 4 carbon atoms, preferably selected from the group consisting of methyl, ethyl, n-propyl, iso-propyl, n-butyl, iso-butyl and tert.-butyl.

Particularly preferred components which can be used to dissolve the heteropoly acid according to the above formula are butantetracarboxylic acid tetratethyl ester or butantetracarboxylic acid tetramethyl ester.

Specific examples of the alkyl ester of a polybasic carboxylic acid are selected from the group consisting of dimethyl glutaric acid, dimethyl adipic acid, dimethyl pimelic acid, dimethyl suberic acid, diethyl glutaric acid, diethyl adipic acid, diethyl pimelic acid, diethyl suberic acid, diemethyl phthalic acid, dimethyl isophthalic acid, dimethyl terephthalic acid, diethyl phthalic acid, diethyl isophthalic acid, diethyl terephthalic acid, butantetracarboxylic acid tetramethylester and butantetracarboxylic acid tetraethylester as well as mixtures thereof. Other examples include dimethylisophthalate, diethylisophthalate, dimethylterephthalate or diethylterephthalate.

Preferably, the heteropoly acid is dissolved in the alkyl ester of the polybasic carboxylic acid in an amount lower than 5 weight percent, preferably in an amount ranging from 0.01 to 5 weight percent, wherein the weight is based on the entire solution.

Further, polyoxymethylene (A) can also be a conventional oxymethylene homopolymer and/or oxymethylene copolymer. As component (A) polyoxymethylenes are described for example in DE-A-2947490 which are generally unbranched linear polymers which contain as a rule at least 80 %, preferably at least 90 %, oxymethylene units (-CH₂-O-). As mentioned before, the term polyoxymethylenes comprises both, homopolymers of formaldehyde or its cyclic oligomers, such as trioxane or 1,3,5,7-tetraoxacyclooctane, and corresponding copolymers. For example the follwing components can be used in the polymerization process: ethyleneoxide, 1,2-propyleneoxide, 1,2-butyleneoxide, 1,3-butyleneoxide, 1,3-dioxane, 1,3-dioxolane, 1,3-dioxepane and 1,3,6-trioxocane as cyclic ethers as well as linear oligo- or polyformales, like polydioxolane or polydioxepane.

Further, functionalized polyoxymethylenes which are prepared by copolymerization of trioxane and the formal of trimethylolpropane (ester), of trioxane and the alpha, alpha and the alpha, beta-isomers of glyceryl formal (ester) or of trioxane and the formal of 1,2,6-hexantriol (ester) can be used as polyoxymethylene (A).

Such POM homo- or copolymers are known per se to the person skilled in the art and are described in the literature.

The molding composition of the present invention preferably comprises polyoxymethylene (A) in an amount up to 97 wt.-%, preferably ranging from 40 to 95 wt.-%, more preferably ranging from 55 to 90 wt.-% or 55 to 85 wt.-%, wherein the weight is based on the total weight of the molding composition.

### Component (B)

The molding composition according to the present invention additionally comprises hydrophilized ultra high molecular weight polyethylene (B) (hereinafter also referred to as "component (B)"). Component (B) of the molding composition according to the invention is a ultra high molecular weight polyethylene which may be hydrophilized by treatment of the surface. An exemplary surface treatment method is plasma treatment as described in EP 711319 A1. The hydrophilized polyethylene comprises homo- or copolymers of ethylene. According to a further embodiment at least 50 mol-%, preferably at least 60 mol-%, more preferably at least 70 mol-% or at least 80 mol-%, especially at least 90 mol-%, at least 95 mol-%, in particular at least 97 mol-% or at least 98.5 mol-% of the total monomer units are ethylene.

According to a preferred embodiment the ultra high molecular weight polyethylene which is hydrophilized is a polyethylene homopolymer which is hydrohilized.

In general the surface of the ultrahigh molecular weight polyethylene (UHMW-PE) is hydrophilized by oxidation of the surface. A typical process is the plasma treatment of the surface. According to a preferred embodiment the hydrophilized ultrahigh molecular weight polyethylene (B) is obtainable or obtained by a plasma treatment of a ultrahigh molecular weight polyethylene, which preferably has an average molecular weight of more than 10⁶ g/mol, more preferably more than about 2.0·10⁶ g/mol. The hydrophilized UHMW-PE surface may comprise groups selected from the group -OH, -NH₂, -COOH, -COOOH, -COH, etc. The degree of hydrophilization of the UHMW-PE can be adjusted by the time and the conditions of the treatment (see EP 711319 A1) as well as the particle size of the UHMW-PE.

Further methods to obtain hydrophilized UHMW-PE are described in US-6,616,918 B and US-5,977,299 A which are herein incorporated by reference.

In a preferred embodiment the hydrophobic surface of an ultrahigh molecular weight polyethylene is treated with a mixture comprising 1 to 99.9% by weight of at least one water soluble wetting agent and 0.1 to 99% by weight of at least one water insoluble wetting agent as described in US-5,977,229. Preferably, a water soluble alkane sulfonate and polyglycol ether, such as polypropylene glycol monobutyl ether is used.

In a further embodiment the surface of the UHMW-PE can be hydrophilized by reacting the surface of the UHMW-PE with a monomer comprising an unsaturated group and which is capable of reacting with the surface and attaching polyethylene glycol or polypropylene glycol to the modified surface.

The unsaturated monomer can be reacted with the surface by irradiation, i.e. with an electron beam as described in US-6,616,918.

It has surprisingly found that the use of hydrophilized UHMW-PE together with polyoxymethylene significantly reduces the wear of such compositions and improves the appearance of the molded articles obtained there from. Surprisingly, the formaldehyde emission of the polyoxymethylene mixed with the hydrophilized UHMW-PE did not significantly increase which was unexpected since hydrophilic groups such as -COOH or even -COOOH are known to enhance the degradation of polyoxymethylenes.

The hydrophilized UHMW-PE may further be characterized by having an acid number of from about more than 0.5 mg KOH/g, preferably about more than 1.0 mg KOH/g, further preferably about 1.5 to about 20 mg KOH/g according to ASTM D 1386. The acid number may provide a measure of the extent of hydrophilization or oxidation of the UHMW-PE.

The hydrophilized UHMW-PE is preferably in the form of a powder, in particular as a micro powder. It has been found that the hydrophilized UHMW-PE in powderous form even further reduces wear and improves the sliding properties. The hydrophilized UHMW-PE generally has a mean particle diameter D₅₀ (volume based and determined by light scattering) in the range of 1 to 5000 µm.

According to a preferred embodiment the hydrophilized ultrahigh molecular weight polyethylene (B) has a mean particle diameter D₅₀ ranging from 10 to 500 µm and particularly preferably from 10 to 150 µm such as 30 to 130 µm and especially from 30 to 90 µm or 90 to 150 µm.

According to a preferred embodiment the molding composition of the present invention comprises the the hydrophilized ultrahigh molecular weight polyethylene (B) which has an average molecular weight of higher than about 1.0·10⁶ g/mol, preferably higher than about 2.0·10⁶ g/mol, more preferably higher than about 4.0·10⁶ g/mol, especially having an average molecular weight ranging from about 1.0·10⁶ g/mol to about 15.0·10⁶ g/mol, more especially ranging from about 3.0·10⁶ g/mol to about 12.0·10⁶ g/mol, determined by viscosimetry. Molecular weight may be calculated by way of the Mark-Houwink equation if so desired.

Preferably, the viscosity number of the hydrophilized ultrahigh molecular weight polyethylene (B) is higher than 1000 ml/g, more preferably higher than 1500 ml/g, especially ranging from 1800 ml/g to 5000 ml/g, such as ranging from 2000 ml/g to 4300 ml/g (determined according to ISO 1628, part 3; concentration in decahydronaphthalin: 0.0002 g/ml).

Suitable hydrophilized UHMW-PE is commercially available from Ticona GmbH, Germany under the tradename GUR^{®}, such as X162 and X163.

In a preferred embodiment of the molding composition according to the present invention the hydrophilized ultrahigh molecular weight polyethylene (B) is present in the molding composition in an amount up to 30 wt.-%, preferably in an amount ranging from 1 to 25 wt.-%, more preferably ranging from 2.5 to 20 wt.-%, especially 4.5 to 15 wt.-%, such as 5.5 to 12 wt.-%, e.g. 6.5 to 9.5 wt.-%, wherein the amount is based on the total weight of the composition.

In another preferred embodiment the weight ratio of the hydrophilized ultrahigh molecular weight polyethylene (B) to polyoxymethylene (A) ranges from 1:99 to 1:1, preferably 1:50 to 1:3, more preferably 1:40 to 1:4, further preferably 1:30 to 1:5, especially 1:20 to 1:6 or 1:15 to 1:7.

In the past, in order to increase the strength and toughness of polyoxymethylene polymers, the polymers have been combined with reinforcing agents, such as glass fibers. Fiber reinforced polyoxymethylene compositions, for instance, are disclosed in U.S. Patent No. 4, 111,887, U.S. Patent No. 4,394,468 and US 5,889,102, which are both incorporated herein by reference. Incorporating reinforcing fibers into polyoxymethylene compositions have provided some improvements in strength. Further improvements, however, are still needed. In particular, a need exists for a fiber reinforced polyoxymethylene composition well suited for use in tribological applications that has enhanced strength and toughness by improving compatibility between the reinforcing fibers and the polymer material.

It has been found that specifically good results could be achieved with molding compositions which comprise additionally reinforcing fibers (D) and preferably coupling agents (C).

### Component (C)

As a further component, the molding composition of the present invention may additionally comprise at least one coupling agent (C) which is preferably a polyisocanate.

The coupling agent may provide a linkage between the polyoxymethylene (A) and hydrophilized UHMW-PE and optionally other components present in the molding composition, such as reinforcing fiber (D) and/or the sizing material which is coated on a reinforcing fiber (D). In principle any coupling agent which is capable to react with nucleophilic groups such as -OH or -NH₂ can be used.

Preferably, the coupling agent is added separately to the other components of the molding composition and can react during a reactive processing step with the other components of the composition.

Preferred are polyfunctional coupling agents, such as trifunctional or bifunctional agents.

The coupling agent may improve the compatibility of the components of the molding composition of the present invention, such as reinforcing fibers (D) or the hydrophilized UHMW-PE (B) with the polymer matrix. A suitable coupling agent (C) is a polyisocyanate, preferably a organic diisocyanate, more preferably a polyisocyanate selected from the group consisting of aliphatic diisocyanates, cycloaliphatic diisocyanates, aromatic diisocyanates and mixtures thereof.

Preferably, the polyisocyanate is a diisocyanate or a triisocyanate which is more preferably selected from 2,2'-, 2,4'-, and 4,4'-diphenylmethane diisocyanate (MDI); 3,3'-dimethyl-4,4'-biphenylene diisocyanate (TODI); toluene diisocyanate (TDI); polymeric MDI; carbodiimide-modified liquid 4,4'-diphenylmethane diisocyanate; para-phenylene diisocyanate (PPDI); meta-phenylene diisocyanate (MPDI); triphenyl methane-4,4'- and triphenyl methane-4,4"-triisocyanate; naphthylene-1,5-diisocyanate; 2,4'-, 4,4'-, and 2,2-biphenyl diisocyanate; polyphenylene polymethylene polyisocyanate (PMDI) (also known as polymeric PMDI); mixtures of MDI and PMDI; mixtures of PMDI and TDI; ethylene diisocyanate; propylene-1,2-diisocyanate; trimethylene diisocyanate; butylenes diisocyanate; bitolylene diisocyanate; tolidine diisocyanate; tetramethylene-1,2-diisocyanate; tetramethylene-1,3-diisocyanate; tetramethylene-1,4-diisocyanate; pentamethylene diisocyanate; 1,6-hexamethylene diisocyanate (HDI); octamethylene diisocyanate; decamethylene diisocyanate; 2,2,4-trimethylhexamethylene diisocyanate; 2,4,4-trimethylhexamethylene diisocyanate; dodecane-1,12-diisocyanate; dicyclohexylmethane diisocyanate; cyclobutane-1,3-diisocyanate; cyclohexane-1,2-diisocyanate; cyclohexane-1,3-diisocyanate; cyclohexane-1,4-diisocyanate; diethylidene diisocyanate; methylcyclohexylene diisocyanate (HTDI); 2,4-methylcyclohexane diisocyanate; 2,6-methylcyclohexane diisocyanate; 4,4'-dicyclohexyl diisocyanate; 2,4'-dicyclohexyl diisocyanate; 1,3,5-cyclohexane triisocyanate; isocyanatomethylcyclohexane isocyanate; 1-isocyanato-3,3,5-trimethyl-5-isocyanatomethylcyclohexane; isocyanatoethylcyclohexane isocyanate; bis(isocyanatomethyl)-cyclohexane diisocyanate; 4,4'-bis(isocyanatomethyl) dicyclohexane; 2,4'-bis(isocyanatomethyl) dicyclohexane; isophorone diisocyanate (IPDI); dimeryl diisocyanate, dodecane-1,12-diisocyanate, 1,10-decamethylene diisocyanate, cyclohexylene-1,2-diisocyanate, 1,10-decamethylene diisocyanate, 1-chlorobenzene-2,4-diisocyanate, furfurylidene diisocyanate, 2,4,4-trimethyl hexamethylene diisocyanate, 2,2,4-trimethyl hexamethylene diisocyanate, dodecamethylene diisocyanate, 1,3-cyclopentane diisocyanate, 1,3-cyclohexane diisocyanate, 1,3-cyclobutane diisocyanate, 1,4-cyclohexane diisocyanate, 4,4'-methylenebis(cyclohexyl isocyanate), 4,4'-methylenebis(phenyl isocyanate), 1-methyl-2,4-cyclohexane diisocyanate, 1-methyl-2,6-cyclohexane diisocyanate, 1,3-bis (isocyanato-methyl)cyclohexane, 1,6-diisocyanato-2,2,4,4-tetra-methylhexane, 1,6-diisocyanato-2,4,4-tetra-trimethylhexane, trans-cyclohexane-1,4-diisocyanate, 3-isocyanato-methyl-3,5,5-trimethylcyclo-hexyl isocyanate, 1-isocyanato-3,3,5-trimethyl-5-isocyanatomethylcyclohexane, cyclo-hexyl isocyanate, dicyclohexylmethane 4,4'-diisocyanate, 1,4-bis(isocyanatomethyl)cyclohexane, m-phenylene diisocyanate, m-xylylene diisocyanate, m-tetramethylxylylene diisocyanate, p-phenylene diisocyanate, p,p'-biphenyl diisocyanate, 3,3'-dimethyl-4,4'-biphenylene diisocyanate, 3,3'-dimethoxy-4,4'-biphenylene diisocyanate, 3,3'-diphenyl-4,4'-biphenylene diisocyanate, 4,4'-biphenylene diisocyanate, 3,3'-dichloro-4,4'-biphenylene diisocyanate, 1,5-naphthalene diisocyanate, 4-chloro-1,3-phenylene diisocyanate, 1,5-tetrahydronaphthalene diisocyanate, metaxylene diisocyanate, 2,4-toluene diisocyanate, 2,4'-diphenylmethane diisocyanate, 2,4-chlorophenylene diisocyanate, 4,4'-diphenylmethane diisocyanate, p,p'-diphenylmethane diisocyanate, 2,4-tolylene diisocyanate, 2,6-tolylene diisocyanate, 2,2-diphenylpropane-4,4'-diisocyanate, 4,4'-toluidine diisocyanate, dianidine diisocyanate, 4,4'-diphenyl ether diisocyanate, 1,3-xylylene diisocyanate, 1,4-naphthylene diisocyanate, azobenzene-4,4'-diisocyanate, diphenyl sulfone-4,4'-diisocyanate, or mixtures thereof.

Especially preferred are aromatic polyisocyanates, such as 4,4'-diphenylmethane diisocyanate (MDI).

The molding composition of the present invention may comprise the coupling agent (B) preferably in an amount ranging from 0.1 to 5 weight-%, more preferably ranging from 0.2 to 3 weight-% and most preferably ranging from 0.3 to 1.5 weight-%, wherein the weight is based on the total weight of the composition.

### Component (D)

Additionally, the molding composition of the present invention may further comprise at least one reinforcing fiber (D).

Reinforcing fibers of which use may advantageously be made are mineral fibers, such as glass fibers, polymer fibers, in particular organic high-modulus fibers, such as aramid fibers, or metal fibers, such as steel fibers, or carbon fibers or natural fibers, fibers from renewable resources.

These fibers may be in modified or unmodified form, e.g. provided with a sizing, or chemically treated, in order to improve adhesion to the plastic. Glass fibers are particularly preferred.

Glass fibers are provided with a sizing to protect the glassfiber, to smooth the fiber but also to improve the adhesion between the fiber and the matrix material. A sizing usually comprises silanes, film forming agents, lubricants, wetting agents, adhesives, optionally antistatic agents and plasticizers, emulsifiers and optionally further additives.

Specific examples of silanes are aminosilanes, e.g. 3-trimethoxysilylpropylamine,
N-(2-aminoethyl)-3-aminopropyltrimethoxy-silane,
N-(3-trimethoxysilanylpropyl)ethane-1,2-diamine,
3-(2-aminoethyl-amino)propyltrimethoxysilane, N-[3-(trimethoxysilyl)propyl]-1,2-ethane-diamine.

Film forming agents are for example polyvinylacetates, polyesters and polyurethanes. Sizings based on polyurethanes may be used advantageously.

The reinforcing fibers may be compounded into the polyoxymethylene matrix, for example in an extruder or kneader. However, the reinforcing fibers may also advantageously take the form of continuous-filament fibers sheathed or impregnated with the polyoxymethylene molding composition in a process suitable for this purpose, and then processed or wound up in the form of a continuous strand, or cut to a desired pellet length so that the fiber lengths and pellet lengths are identical. An example of a process particularly suitable for this purpose is the pultrusion process.

According to the invention, the long-fiber-reinforced polyoxymethylene molding composition may be a glass-fiber bundle which has been sheathed with one or more layers of the polyoxymethylene matrix polymer in such a way that the fibers have not been impregnated and mixing of the fibers and the polyacetal matrix polymer does not take place until processing occurs, for example injection molding. However, the fibers have advantageously been impregnated with the polyacetal matrix polymer.

According to a preferred embodiment of the invention the reinforcing fibers may also advantageously be impregnated or sheathed in the form of continuous-filament fibers with the remaining parts of the molding composition as defined in the present invention, i.e. the at least one polyoxymethylene (A), optionally the at least one coupling agent (C), the hydrophilized UHMW-PE (B) and other optional components such as a formaldehyde scavenger (E), in a process suitable for this process, and then wound up or processed in the form of a continuous strand, or chopped to a desired pellet length, so that the fiber lengths and pellet lengths are equal. An example of a process particularly suited to this purpose is the pultrusion process.

In one preferred embodiment of the invention, the long-fiber-reinforced molding composition of the invention is prepared by the pultrusion process, where
i) fiber bundles are conducted through a die charged with a melt made from a polymer matrix comprising at least one polyoxymethylene (A), the at least one coupling agent (C), the hydrophilized UHMW-PE (B) and other optional components such as a formaldehyde scavenger (E),
ii) the immersed fiber bundles are preferably conducted through a shaping die,
iii) the fiber bundles are optionally cooled,
iv) the fiber bundles are optionally postformed, and
v) the fiber bundles are cut to the length of the structure preferably substantially perpendicular to their running direction, or are wound up in the form of a continuous structure.

The impregnation of the fiber bundles with the polymer matrix, for example via pultrusion in step i) of the above process, may also take place by other suitable processes. For example, the fibers may be impregnated by a process in which the fiber bundle is saturated by the polymer matrix, wherein the fiber bundle is laid onto carrier equipment, and wherein the carrier equipment, together with the fiber bundle lying thereon, is conducted through impregnating equipment. A process of this type is described in EP-A-756 536.

The fiber may also be impregnated by a process in which a plastifying extruder is used and a fiber strand is conducted by way of guide apertures and preheating equipment and is wetted with a liquid- film of the polymer matrix in an impregnating apparatus and then is introduced into the plastifying extruder in which the individual fibers are chopped and mixed, the mixture being discharged in the form of a fiber-reinforced polymer composition of the invention, which may be capable of further processing, wherein the following steps can be used:
a) passing by way of coating nozzles into the inlet of the plastifying extruder, and preferably parallel to the extruder axes and approximately tangentially, the fiber strand is wound up onto an extruder screw and around the extruder screws in an advancing direction, and also drawn into holes in the extruder barrel, whose diameter has been enlarged by at least four times the thickness of the fiber strand, where
b) preferably in the inlet the right-hand coating nozzle directly applies a film of polymer to one side of the fiber strand, while application to the second side takes place indirectly by pressing the fiber strand into the liquid film of polymer matrix previously applied from the left-hand coating nozzle to the screw shaft, whereupon the individual continuous-filament fibers are subjected to impregnating or penetrating action at the extruder screws on both flat sides of the fiber strand in an inlet and impregnating section and these sides are wetted or saturated by the liquid films of thermoplastic polymer,
c) and preferably then the fiber strand or the individual fibers thoroughly saturated or thoroughly impregnated with polymer matrix are passed out of the inlet and impregnation section by way of a cutting edge into the short discharge and conveying section of a reduced-diameter barrel, and thus chopped into substantially predetermined lengths.

An example of the process of this type is described in DE-A-1 98 36 787.

The environmentally compatible and cost-effective process described preferably gives a small rod-shaped structure of a certain shape. The length of the rod-shaped structure is from 3 to 100 mm, preferably from 4 to 50 mm, and particularly preferably from 5 to 15 mm. The diameter of the rod-shaped structure, also termed a pellet, is generally from 1 to 10 mm, from 2 to 8 mm, and particularly preferably from 3 to 6 mm.

According to a preferred embodiment, the molding composition of the present invention comprises at least one reinforcing fiber which is a mineral fiber, preferably a glass fiber, more preferably a coated or impregnated glass fiber. Glassfibers which are suitable for the molding composition of the present invention are commercially available, e.g. Johns Manville, ThermoFlow^{®}Chopped Strand 753, OCV Chopped Strand 408 A, Nippon Electric Glass Co. (NEG) Chopped Strand T-651.

Preferably, the reinforcing fibers have a diameter of from about 5 microns to about 100 microns.

The reinforcing fibers are preferably present in the molding composition of the present invention in an amount ranging from 5 to 50 wt.-%, preferably 7 to 45 wt.-% and especially preferably from 10 to 40 wt.-%, wherein the weight is based on the total weight of the composition.

### Component (E)

According to a preferred embodiment of the present invention the molding composition additionally comprises a formaldehyde scavenger (E).

In the prior art sensitive additives which can react with the coupling agent (C) were believed to be avoided. Consequently, additives which reduce the formaldehyde emission have not been used in the prior art for fiber reinforced polyoxymethylene molding compositions due to the presence of highly reactive isocyanate coupling agents. However, it has surprisingly been found that formaldehyde scavengers can be used in the molding compositions of the present invention and it has been found that the formaldehyde emissions are significantly reduced.

Formaldehyde scavengers are additives for scavenging formaldehyde. Suitable formaldehyde scavengers are nitrogen-containing stabilizers. Mainly, these are heterocyclic compounds having at least one nitrogen atom as hetero atom which is either adjacent to an amino-substituted carbon atom or to a carbonyl group, for example pyridine, pyrimidine, pyrazine, pyrrolidone, aminopyridine and compounds derived therefrom. Advantageous compounds of this nature are aminopyridine and compounds derived therefrom. Any of the aminopyridines is in principle suitable, for example 2,6-diaminopyridine, substituted and dimeric aminopyridines, and mixtures prepared from these compounds. Other advantageous materials are polyamides and dicyane diamide, urea and its derivatives and also pyrrolidone and compounds derived therefrom. Examples of suitable pyrrolidones are imidazolidinone and compounds derived therefrom, such as hydantoines, derivatives of which are particularly advantageous, and those particularly advantageous among these compounds are allantoin and its derivatives. Other particularly advantageous compounds are triamino-1,3,5-triazine (melamine) and its derivatives, such as melamine-formaldehyde condensates and methylol melamine. Very particular preference is given to melamine, methylol melamine, melamine-formaldehyde condensates, and allantoin. Oligomeric polyamides are also suitable in principle for use as formaldehyde scavengers. The formaldehyde scavenger may be used individually or in combination.

Further, the aldehyde scavenger (E) can be a guanidine compound which can include an aliphatic guanamine-based compound, an alicyclic guanamine-based compound, an aromatic guanamine-based compound, a hetero atom-containing guanamine-based compound, or the like.

Examples of the aliphatic guanamine-based compounds include monoguanamines such as acetoguanamine, valeroguanamine, caproguanamine, heptanoguanamine, capryloguanamine or stearoguanamine; alkylene bisguanamines such as succinoguanamine, glutaroguanamine, adipoguanamine, pimeloguanamine, suberoguanamine, azeloguanamine or sebacoguanamine.

Examples of the alicyclic guanamine-based compounds include monoguanamines such as cyclohexanecarboguanamine, norbornene carboguanamine, cyclohexenecarboguanamine or norbornane carboguanamine; and derivatives thereof in which the cycloalkane residue is substituted with 1 to 3 functional groups such as alkyl group, hydroxy group, amino group, acetoamino group, nitrile group, carboxy group, alkoxycarbonyl group, carbamoyl group, alkoxy group, phenyl group, cumyl group or hydroxyphenyl group.

Examples of the aromatic guanamine-based compounds are monoguanamines such as benzoguanamine and derivatives thereof in which the phenyl residue is substituted with 1 to 5 functional groups such as alkyl group, hydroxy group, amino group, acetoamino group, nitrile group, carboxy group, alkoxy carbonyl group, carbamoyl group, alkoxy group, phenyl group, cumyl group or hydroxyphenyl group, (for example, toluguanamine, xyloguanamine, phenylbenzoguanamine, hydroxybenzoguanamine, 4-(4'-hydroxyphenyl)benzoguanamine, nitrilebenzoguanamine, 3,5-dimethyl-4-hydroxybenzoguanamine, 3,5-di-t-butyl-4-hydroxybenzoguanamine, and the like), naphthoguanamine and derivatives thereof in which the naphthyl residue is substituted with the above functional group; polyguanamines such as phthaloguanamine, isophthaloguanamine, terephthaloguanamine, naphthalene diguanamine or biphenylene diguanamine; aralkyl- or aralkylene-guanamines such as phenylacetoguanamine, [beta]-phenylpropioguanamine or xylylene bisguanamine.

Examples of the heteroatom-containing guanamine-based compound include acetal group-containing guanamines such as 2,4-diamino-6-(3,3-dimethoxypropyl-s-triazine; dioxane ring-containing guanamines such as [2-(4',6'-diamino-s-triazin-2'-yl)ethyl]-1,3-dioxane or [2-(4',6'-diamino-s-triazin-2'-yl)ethyl]-4-ethyl-4-hydroxymethyl-1,3-dioxane; tetraoxospiro ring-containing guanamines such as CTU-guanamine or CMTU-guanamine; isocyanuric ring-containing guanamines such as 1,3,5-tris(2-(4',6'-diamino-s-triazin-2'-yl)ethyl)isocyanurate or 1,3,5-tris[3-(4',6'-diamino-s-triazin-2'-yl)propyl]-isocyanurate); imidazoyl ring-containing guanamines such as guanamine compounds described in JP-A 6-179671 and JP-A 7-10871 ; imidazole ring-containing guanamines such as guanamine compounds described in JP-A 47-41120 , JP-A 3-284675 and JP-A 7-33766; and guanamine compounds described in JP-A 2000-154181, and the like.

Furthermore, the guanamine-based compound includes a compound in which the hydrogen atom of the amino group of the aforementioned guanamine-based compound is substituted with an alkoxymethyl group such as mono- to tetra-methoxymethylbenzoguanamine, mono- to octa-methoxymethyl-CTU-guanamine, or the like.

Among these guanamine-based compounds, particularly preferable are guanamine, acetoguanamine, benzoguanamine, and CTU-guanamine.

Further formaldehyde scavengers (E) which are linked to oligomers or polymers are also suitable. Examples of these groups of formaldehyde scavengers are shown in formula I.

R¹-[X-CO-NH-R³-NH-CO-NR²-R⁴]ₒ (I),

wherein R¹ is a moiety comprising 2 to 20 carbon atoms, preferably an aliphatic or aromatic rest, more preferably the aliphatic or aromatic rest of a polyhydroxy or a polyamino compound having at least 2, preferably 2 to 6 hydroxy and/or amino groups,
X is -O- or -NR²-
R² is H, alkyl, cycloalkyl, aryl or aralkyl,
R³ is alkylene, cycloalkylene, arylene or aralkylene,
R⁴ is a moiety selected from the formula II, III, IV, V, VI and VII

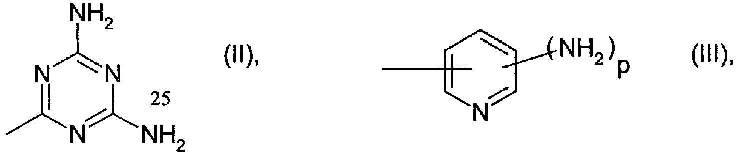

- CO-NHR² (IV),

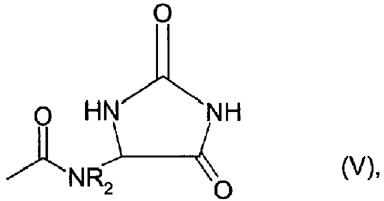

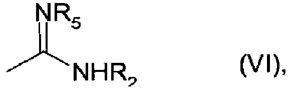

-HN-C(=NH)-NH-CN (VII),

wherein R⁵ is H, -CO-CH₃ or -CO-C₆H₅,
o is an integer ranging from 2 to 6 and
p is 1 or 2.

Additionally, suitable formaldehyde scavengers (E) are imidazolidine-2-one compounds. Preference is given to imidazolidine-2-one compounds of the following formula: 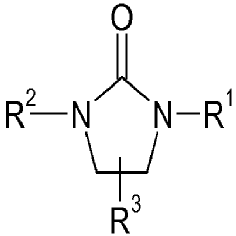 wherein R¹ and R² are independently from each other H, C₁-C₂₀-alkyl, OR4, -NO₂, hydroxyalkyl having 1 to 10 carbon atoms, R³ is H, C₁-C₂₀ alkyl which is optionally substituted, keto group, aldehyde group, -COOR4, amine or amide group, or an aromatic ring having 5 to 10 carbon atoms, R⁴ is a C₁ - C₄ -alkyl.

Especially preferred imidazolidine-2-one compounds are:

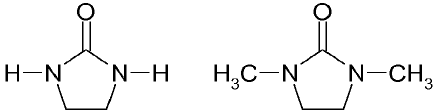

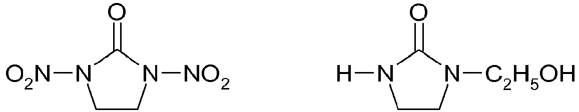

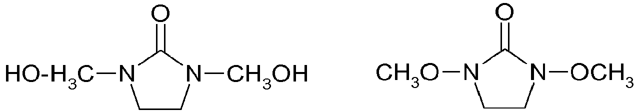

It has been surprisingly found that aromatic formaldehyde scavengers (E) are very suitable for the molding compositions of the present invention.

According to a preferred embodiment of the present invention, the formaldehyde scavenger (E) has a melting point higher than 235 °C, preferably higher than 250 °C, more preferably higher than 280 °C, most preferably higher than 300 °C and especially higher than 320 °C. Further, it has been found that the pKa value of the formaldehyde scavenger (E) may influence the formaldehyde emission. According to a preferred embodiment, the formaldehyde scavenger (D) has a pKa value ranging from 4.5 to 10, preferably from 4.5 to 6.5.

Further, preference is given to a formaldehyde scavenger (E) which has at least one triazine moiety. The use of formaldehyde scavengers which comprise at least one triazine moiety does not only have excellent formaldehyde reducing properties but also positively influences the mechanical properties of the molding composition. Preferred formaldehyde scavengers (E) which comprise a triazine moiety are selected from the group consisting of guanamine, melamine, N-butylmelamine, N-phenylmelamine, N,N-diphenylmelamine, N,N-diallylmelamine, N,N',N"-triphenylmelamine, benzoguanamine, acetoguanamine, 2,4-diamino-6-butyl-sym-triazine, ammeline, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, 2,4-dioxy-6-amino-sym-triazine, 2-oxy-4,6-diamino-sym-triazine, 1,1-bis(3,5-diamino-2,4,6-triazinyl)methane, 1,2-bis(3,5-diamino-2,4,6-triazinyl)ethyne (other name: succinoguanamine), 1,3-bis(3,5-diamino-2,4,6-triazinyl)propane, 1,4-bis(3,5-diamino-2,4,6-triazinyl)butane, methylenated melamine, ethylenedimelamine, triguanamine, melamine cyanurate, ethylene dimelamine cyanurate and triguanamine cyanurate.

These triazine derivatives may be used singly or in combinations of two or more compounds. Guanamines and melamine are preferred, and melamine is particularly preferable.

Preferred formaldehyde scavengers (E) are hydrazides, more preferably dihydrazides such as sebacic dihydrazide (SDH).

Examples of the hydrazide compound which can be used in the present invention as formaldehyde scavenger (E) include an aliphatic carboxylic acid hydrazide-based compound, an alicyclic carboxylic acid hydrazide-based compound, an aromatic carboxylic acid hydrazide-based compound, hetero atom-containing carboxylic acid hydrazide-based compound, a polymer-type carboxylic acid hydrazide-based compound, and the like. These carboxylic acid hydrazides can be used alone or in combination of two or more of them.

Examples of the aliphatic carboxylic acid hydrazide-based compound include: monocarboxylic acid hydrazide (lauric acid hydrazide, stearic acid hydrazide, 12-hydroxystearic acid hydrazide 1,2,3, 4-butane tetracarboxylic acid hydrazide or the like); polycaboxylatic acid hydrazide such as succinic acid mono- or di-hydrazide, glutaric acid mono- or di-hydrazide, adipic acid mono- or di-hydrazide, pimelic acid mono- or di-hydrazide, suberic acid mono- or di-hydrazide, azelaic acid mono- or di-hydrazide, sebacic acid mono- or di-hydrazide, dodecanedioic acid mono- or di-hydrazide, hexadecane dioic acid mono- or di-hydrazide, eicosandioic acid mono- or di-hydrazide, 7,11-octadecadiene-1,18-dicarbohydrazide, and the like. Examples of the alicyclic carboxylic acid hydrazide-based compound include: monocarboxylic acid hydrazides such as cyclohexane carboxylic acid hydrazide; and polycarboxylic acid hydrazides such as dimer acid mono- or di-hydrazide, trimer acid mono- to tri-hydrazide, 1,2-, 1,3-, or 1,4-cyclohexane dicarboxylic acid mono- or di-hydrazide, cyclohexane tricaboxylic acid mono- to tri-hydrazide, and the like. Examples of the aromatic carboxylic acid hydrazide include: mono-carboxylic acid hydrazides (benzoic acid hydrazide and functional group substitution products thereof, such as derivatives where functional groups such as alkyl group, hydroxy group, acetoxy group, amino group, acetoamino group, nitrile group, carboxy group, alkoxycarbonyl group, carbamoyl group, alkoxy group, phenyl group, benzyl group, cumyl group, or hydroxyphenyl group are substituted by 1 to 5 phenyl residues of benzoguanamine (for example, o-toluic acid hydrazide, m-toluic acid hydrazide, p-toluic acid hydrazide, 2,4-, 3,4-, 3,5- or 2,5-dimethylbenzoic acid hydrazide, o-, m- or p-hydroxy-benzoic acid hydrazide, o-, m- or p-acetoxy-benzoic acid hydrazide, 4-hydroxy-3-phenyl-benzoic acid hydrazide, 4-actoxy-3-phenyl-benzoic acid hydrazide, 4-pheny-benzoic acid hydrazide, 4-(4'-phenyl)benzoic acid hydrazide, 4-hydroxy-3,5-dimethyl-benzoic acid hydrazide, 4-hydroxy-3,5-di-t-butyl-benzoic acid hydrazide, 4-hydroxy-3,5-di-t-butylphenyl-benzoic acid hydrazide, and 4-hydroxy-3,5-di-t-butylphenyl-propionic acid hydrazide); [alpha]-or [beta]-naphthoic acid hydrazide and functional substitution products thereof, such as 1-naphthoic acid hydrazide, 2-naphthoic acid hydrazide, 3-hydroxy-2-naphthoic acid hydrazide, or 6-hydroxy-2-naphthoic acid hydrazide; and polycarboxylic acid hydrazides such as isophthalic acid mono- or di-hydrazide, terephthalic acid mono- or di-hydrazide, 1,4-or 2,6-naphthalene dicarboxylic acid mono- or di-hydrazide, 3,3'-, 3,4'- or 4,4'-diphenyldicarboxylic acid mono- or di-hydrazide, diphenylether dicarboxylic acid mono- or di-hydrazide, diphenylmethane dicarboxylic acid mono- or di-hydrazide, diphenylethane dicarboxylic acid mono- or di-hydrazide, diphenoxyethane dicarboxylic acid mono- or di-hydrazide, diphenylsulphone dicarboxylic acid mono- or di-hydrazide, diphenylketone dicarboxylic acid mono-or di-hydrazide, 4,4"-terphenyl dicarboxylic acid mono- or di-hydrazide, 4,4"'-quaterphenyldicarboxylic acid mono- or di-hydrazide, 1,2,4-benzene tricarboxylic acid mono- to tri-hydrazide, pyromellitic acid mono- to tetra-hydrazide, and 1,4,5,8-naphthoic acid mono- to tetra-hydrazide).

Examples of the heteroatom-containing carboxylic acid hydrazide-based compound include: mono- or di-hydrazide of dioxane ring-containing carboxylic acid hydrazides such as 5-methylol-5-ethyl-2-(1,1-dimethyl-2-carboxyethyl)-1,3-diox ane; tetraoxo spiro ring-containing carboxylic acid hydrazides such as mono- or di-hydrazide of 3,9-bis(2-carboxyethyl)-2,4,8,10-tetraoxospiro[5,5]undecane, mono- or di-hydrazide of 3,9-bis(2-methoxycarbonylethyl)-2,4,8,10-tetraoxospiro[5,5] undecane, mono- or di-hydrazide of 3,9-bis(1,1-dimethyl-1-carboxymethyl)-2,4,8,10-tetraoxospir o[5,5]undecane, or mono- or di-hydrazide of 3,9-bis(1,1-dimethyl-1-methoxycarbonylmethyl)-2,4,8,10-tetraoxospiro[5,5]undecane; isocyanuric ring-containing carboxylic acid hydrazides such as mono- to tri-hydrazide of 1,3,5-tris[2-carboxyethyl]isocyanulate, or mono- to tri-hydrazide of 1,3,5-tris(3-caboxypropyl)isocyanurate; and hydantoin ring-containing carboxylic acid hydrazides such as 1,3-bis(2-hydrazinocarbonylethyl)5-isopropyl hydantoin.

The polymer-type carboxylic acid hydrazide-based compounds are exemplified as follows: single polymers or copolymers of poly(meth)acrylic acid hydrazides which may be cross-linked compounds, such as olefin copolymer, vinyl monomer copolymer, styrene copolymer of divinylbenzene crosslinked compound, or bis(meth)acrylic ester crosslinked compound; polymer described in JP-A 55-145529 and JP-A 56-105905 ; commercially available "amino polyacrylic amide APA" Otsuka Chemical Co., Ltd.; and copolymer described in US patent 3574786.

Further, dicyandiamide (DCD) can be used as component (E).
Further, zeolites can be used as component (E).

According to a preferred embodiment of the present invention, the formaldehyde scavenger (E) has at least one -NH₂, preferably at least two -NH₂ groups, most preferably at least three -NH₂ groups.

It has surprisingly been found that an excellent performance can be achieved with a formaldehyde scavenger (E) which has a melting point which is at least 10 °C, preferably at least 20 °C, more preferably at least 30 °C, even more preferably at least 50 °C higher than the melting point of the polyoxymethylene (A).

Especially preferred as a formaldehyde scavenger (E) is melamine.

The formaldehyde scavenger (E) is preferably present in the composition in an amount of up to 2 weight-%, more preferably in an amount ranging from 0.001 to 1.5 wt.-%, further more preferably ranging from 0.01 to 1.0 wt.-%, most preferably ranging from 0.05 to 0.5 wt.-% and especially ranging from 0.08 to 0.3 weight-%, wherein the weight is based on the total weight of the composition.

The molding materials or moldings according to the invention can optionally be stabilized and/or modified by known additives. Such stabilizers and processing auxiliaries other than the components (C) to (E) (defined above) can be used as optional component (F). Possible additives and processing auxiliaries are known to the person skilled in the art.

Component (F) is usually present in an amount up to 10 wt.-%, preferably from 0.1 to 5 wt.-%, more preferably from 0.2 to 4 wt.-%, especially 0.5 to 3 wt.-%, wherein the amount is based on the total weight of the composition.

The stabilizers are, for example, antioxidants, acid scavengers, UV stabilizers or heat stabilizers. In addition, the molding material or the molding may contain processing auxiliaries, for example adhesion promoters, lubricants, nucleating agents, demolding agents, fillers, or antistatic agents and additives which impart a desired property to the molding material or to the molding, such as dyes and/or pigments and/or impact modifiers and/or additional tribological additives other than component (B) and/or glass beads and/or additives imparting electrical conductivity; and mixtures of these additives, but without limiting the scope to said examples.

A specially preferred molding composition of the invention comprises
a) a polyoxymethylene having a content of terminal hydroxyl groups of at least 15 mmol/kg and most preferably ranging from 15 to 50 mmol/kg, especially 18 to 40 mmol/kg,
b) hydrophilized ultra high molecular weight polyethylene having an average molecular weight higher than 1.0.10⁶ g/mol, preferably higher than 2.0·10⁶ g/mol, more preferably higher than 4.0·10⁶ g/mol,
c) optionally one or more coupling agent, preferably an organic polyisocya n ide,
d) optionally one or more reinforcing fiber(s) (D), preferably glassfiber(s),
e) optionally 0.05 to 0.5 wt.-%, preferably 0.08 to 0.3 wt.-% of one or more formaldehyde scavenger (E), preferably an aromatic formaldehyde scavenger, more preferably a formaldehyde scavenger having a melting point higher than 235°C, most preferably a formaldehyde scavenger having a melting point which is at least 10°C higher than the melting point of the polyoxymethylene (A), and especially preferable melamine or a melamine derivative; wherein the weight is based on the total weight of the composition;
   wherein the weight ratio of the hydrophilized ultrahigh molecular weight polyethylene (B) to polyoxymethylene (A) ranges from 1:40 to 1:4, further preferably 1:30 to 1:5, especially 1:20 to 1:6 or 1:15 to 1:7.

If coupling agents are present in the molding composition of the present invention the reactive processing of the components is typically effected at temperatures from 100 to 260°C, such as from 150 to 220°C, and the duration of mixing is typically from 0.2 to 60 minutes.

A further embodiment of the present invention is a method for the manufacturing of molded articles comprising melt mixing the molding composition of the present invention.

A further embodiment of the present invention is a method for the manufacturing of the molding composition of the invention comprising melt mixing the components of the molding compostion.

Melt mixing can be carried out by aggregates molding apparatuses known to the person skilled in the art. Preferably the melt mixing step is carried out at a temperature ranging from 100 to 280 °C, more preferably from 120 to 260 °C, such as 140 to 240 °C or 180 to 220 °C.

A further preferred embodiment of the present invention is a process for the manufacturing of a molding composition of the present invention comprising the following step of melt mixing a composition comprising
polyoxymethylene (A);
hydrophilized ultra high molecular weight polyethylene (B);
optionally, at least one coupling agent (C);
optionally, at least one reinforcing fiber (D); and
optionally at least one formaldehyde scavenger (E), at a temperature ranging from 120 °C to 260 °C.

A preferred embodiment of the process comprises melt mixing a composition comprising:
polyoxymethylene (A);
hydrophilized ultra high molecular weight polyethylene (B);
at least one coupling agent (C);
at least one reinforcing fiber (D); and
at least one formaldehyde scavenger (E)
at a temperature ranging from 120 °C to 260 °C wherein the melting point of the formaldehyde scavenger is at least 10 °C higher than the melt mixing temperature.

The preferred ranges referred to above in conjunction with the composition of the invention apply also to the process of the invention.

A further embodiment of the invention is a molding composition which is obtainable by the process of the invention.

In one embodiment, the molding composition of the present disclosure is, if a coupling agent is present, reacted together and compounded prior to being used in a molding process. For instance, in one embodiment, the different components can be melted and mixed together in a conventional single or twin screw extruder at a temperature described above. Extruded strands may be produced by the extruder and pelletized. Prior to compounding, the polymer components may be dried to a moisture content of about 0.05 weight percent or less. If desired, the pelletized compound can be ground to any suitable particle size, such as in the range of from about 100 microns to about 500 microns.

A further embodiment of the present invention is a molded part obtained or obtainable by molding a molding composition of the present invention, in particular obtained by or obtainable by melt mixing the molding composition of the present invention.

The molded parts demonstrate the excellent balance of mechanical properties as mentioned above in addition to excellent tribological properties and appearance.

Especially in case the molding composition is reinforced, the molded parts demonstrate an elongation or strain at break (5 mm/min) of higher than 2.0 %, more preferably higher than 2.2 %, especially higher than 2.8 %, determined according to ISO 527.

Especially in case the molding composition is not reinforced, the molded parts demonstrate an elongation or strain at break (5 mm/min) of higher than 7.0 %, more preferably higher than 8.0 %, especially higher than 9.0 % or ranging from 8.0 to 15 %, determined according to ISO 527.

Further, preferably the Charpy notched impact strength (determined at 23 °C according to ISO 179-1/1eA(CNI)) is higher than 6.0, more preferably higher than 8.0 kJ/m², or ranging from 9 to 20 kJ/m²,especially in case the molding composition is reinforced.

Further, preferably the Charpy notched impact strength (determined at 23 °C according to ISO 179-1/1eA(CNI)) is higher than 2.0, more preferably higher than 2.5 kJ/m², or ranging from 3.0 to 10 kJ/m²,especially in case the molding composition is not reinforced.

The molded parts show an excellent tribological behavior. The molded parts show preferably a wear rate lower than 15 µm/h, preferably lower than 12 µm/h (Tribology (wear rate versus steel; roughness R_{z} = 1 µm) was measured by a ball-on-3 plates test setup (MCR 301 test, v = 100 mm/s, F = 5N) from Anton Paar Germany GmbH), especially in case the molding composition is reinforced. The molded parts show an excellent tribological behavior. The molded parts show preferably a wear rate lower than 10 µm/h, preferably lower than 8 µm/h, more preferably lower than 6 µm/h, especially lower than 4 µm/h (Tribology (wear rate versus steel; roughness R_{z} = 0.1 µm) was measured by a ball-on-3 plates test setup (MCR 301 test, v = 100 mm/s, F = 5N) from Anton Paar Germany GmbH), especially in case the molding composition is not reinforced.

The coefficient of friction is preferably lower than 0.40, more preferably lower than 0.35, especially lower than 0.30 (Tribology (wear rate versus steel; roughness R_{z} = 0.1 µm) was measured by a ball-on-3 plates test setup (MCR 301 test, v = 100 mm/s, F = 5N) from Anton Paar Germany GmbH), especially in case the molding composition is not reinforced.

Preferred molded parts are parts used in the automotive industry, especially housings, latches, window winding systems, pulleys, wiper systems, sun roof systems, seat adjustment, levers, gears, claws, pivot housings, brackets or wiper arms.

The molded parts can be obtained by the molding techniques known in the art such as extrusion, injection molding thermoforming, blow molding, rotational molding and the like.

The molding composition of the present invention is especially suitable to be used in the manufacturing of molded parts used in the automotive industry. Thus, a further embodiment of the present invention is the use of the composition according to the present invention for the manufacturing of molded parts used in the automotive industry.

Due to the excellent mechanical and tribological properties the molding composition of the invention can be used for several applications where low wear and excellent gliding properties as well as appearance is desired.

A further embodiment is the use of the composition or molded parts for the manufacturing of molded parts used in the automotive industry or for housings, latches, window winding systems, wiper systems, pulleys, sun roof systems, seat adjustments, levers, gears, claws, pivot housings, wiper arms, brackets or seat rails bearings, gears, cams, rollers, sliding elements such as sliding plates, conveyer belt parts such as chain elements and links, castors, fasteners, levers, conveyor system wear strips and guard rails.

The following examples are presented to further illustrate this invention.

The examples are not, however, intended to limit the invention in any way.

### Examples:

The following components were used in the Examples:

### POM - A:

Polyacetal containing 3.4 wt.-% of comonomer dioxolane with an MVR (190°C / 2.16kg) of 7.9 cm³/10min and a portion of terminal OH-groups of 6 - 10 mmol/kg

### POM - B:

Polyacetal containing 3.4 wt.-% of comonomer dioxolane with an MVR (190°C / 2.16kg) of 8.3 cm³/10min and a proportion of terminal OH groups of 20 - 25 mmol/kg

### UHMWPE - C:

Ultrahigh-molecular-weight polyethylene powder whose average molecular weight is 5.0·10⁶ g/mol (viscosity number: 2400 ml/g) and has an average particle size (D₅₀) of 120 +/- 20µm

### UHMWPE - D:

Ultrahigh-molecular-weight polyethylene powder whose average molecular weight is 9.2·10⁶ g/mol (viscosity number: 3850 ml/g) and has an average particle size (D₅₀) of 60 +/- 20µm

### UHMWPE - E:

Ultrahigh-molecular-weight polyethylene powder whose average molecular weight is 5.0·10⁶ g/mol (viscosity number: 2400 ml/g) and has an average particle size (D₅₀) of 120 +/- 20µm, hydrophilized according to the technology described in EP 711319 A1

### UHMWPE - F:

Ultrahigh-molecular-weight polyethylene powder whose average molecular weight is 9.2·10⁶ g/mol (viscosity number: 3850 ml/g) and has an average particle size (D₅₀) of 60 +/- 20µm, hydrophilized according to the technology described in EP 711319 A1;

**GF:** reinforcing fiber (NEG ECS 03 T-651H); sized glass fiber

**Additive:** acid scavenger; antioxidants, nucleating agents; stabilizer

All components beside the glass fiber were mixed together. For the compounding a ZSK 25MC, (Werner&Pfleiderer, Germany) was used (zone temperature 190°C, melt temperature about 210°C). The glass fiber, if present, was added using a downstream feeding unit at a suitable position. The screw configuration with kneading elements was chosen so that effective thorough mixing of the components took place during the reactive extrusion as well as an optimal glass fiber length was obtained.

Unless indicated otherwise all determinations have been carried out at room temperature (23 °C).

The testing of the prepared molding compositions was performed according to the following standards:
MVR (190°C; 2.16kg): ISO 1133;
Charpy notched impact strength: determined at 23 °C according to ISO 179-1/1eA(CNI);
Tensile modulus, stress at break and elongation at break have been determined according to ISO 527;
Portion of terminal OH groups in POM has been determined as described in K. Kawaguchi, E. Masuda, Y. Tajima, Journal of Applied Polymer Science, Vol. 107, 667 - 673 (2008).
Melting point of polyoxymethylene (POM) has been determined with Differential Scanning Calorimetry (DSC); heating rate 10 K/min according to ISO 11357-1, - 2, -3.
Tribology (wear rate versus steel; roughness R_{z} = 1 µm) was measured by a ball-on-3 plates test setup (MCR 301 test, v = 100 mm/s, F = 5N) from Anton Paar Germany GmbH in case the compostions were reinforced.
Tribology (wear rate versus steel; roughness R_{z} = 0.1 µm) was measured by a ball-on-3 plates test setup (MCR 301 test, v = 100 mm/s, F = 5N) from Anton Paar Germany GmbH in case the compostions were not reinforced.

The results are listed in the following tables.
Table 1 shows the molding compositions of the invention (examples 3, 4, 7 and 8) as well as the comparative examples 1, 2, 5 and 6. The amounts referred to in the table for the components are based on the total weight of the composition.
Table 2 shows a glas fiber reinforced molding composition of the invention (examples 11 and 12) as well as the comparative examples 9 and 10. The amounts referred to in the table for the components are based on the total weight of the composition.

**Tabelle 1: Molding compositions comprising POM and UHMW-PE**

| Example | POM [wt%] | additive [wt%] | UHMWPE [wt%] | UHMWPE particle size [D50µm] | Dynamic Coefficent of friction (COF) | Wear rate [µm/h] | Modulus [MPa] | Charpy Notched Impact Strength [kJ/m²] | Stress at Break [MPa] | Strain at Break [%] | MVR (190°C, 2,16kg) [cm³/10min] |
|---|---|---|---|---|---|---|---|---|---|---|---|
| **1** (Comparative) | POM-A [89] | [1] | UHMWPE-C [10] | 120 | 0,31 | 9,4 | 2041 | 2,8 | 44,7 | 11 | 5,2 |
| **2** (Comparative) | POM-A [89] | [1] | UHMWPE-D [10] | 60 | 0,32 | 5,4 | 2080 | 3,3 | 45,2 | 11 | 5,6 |
| **3** | POM-A [89] | [1] | UHMWPE-E [10] | 120 | 0,34 | 7,0 | 2097 | 3,3 | 44,1 | 10 | 5,4 |
| **4** | POM-A [89] | [1] | UHMWPE-F [10] | 60 | 0,29 | 2,5 | 2119 | 3,3 | 45,0 | 11 | 6,0 |
| **5** (Comparative) | POM-B [89] | [1] | UHMWPE-C [10] | 120 | 0,33 | 8,7 | 2072 | 3,5 | 44,6 | 11 | 4,8 |
| **6** (Comparative) | POM-B [89] | [1] | UHMWPE-D [10] | 60 | 0,31 | 4,9 | 2062 | 3,8 | 45,0 | 11 | 5,2 |
| **7** | POM-B [89] | [1] | UHMWPE-E [10] | 120 | 0,36 | 5,7 | 2051 | 3,8 | 43,4 | 10 | 4,9 |
| **8** | POM-B [89] | [1] | UHMWPE-F [10] | 60 | 0,30 | 0,5 | 2017 | 3,3 | 43,7 | 11 | 5,5 |

**Table 2: Molding compositions with POM, UHMWPE and glas fiber**

| Example | POM-B [wt %] | GF [wt%] | additive [wt%] | UHMWPE [wt%] | UHMWPE particle size [D50µm] | Dynamic Coefficient of friction (COF) | Wear rate [µm/h] | Modulus [MPa] | Charpy Notched Impact Strength [kJ/m²] | Stress at Break [MPa] | Strain at Break [%] | MVR (190°C, 2,16kg) [cm³/10 min] |
|---|---|---|---|---|---|---|---|---|---|---|---|---|
| **9** (comparative) | 65.6 9 | 26 | [1.31] | UHMWPEC [7] | 120 | 0,24 | 8,6 | 8496 | 8 | 109,9 | 2,3 | 0,6 |
| **10** (comparative) | 65.6 9 | 26 | [1.31] | UHMWPED [7] | 60 | 0,27 | 15,9 | 9398 | 12,2 | 143,5 | 3,2 | 0,6 |
| **11** | 65.6 9 | 26 | [1.31] | UHMWPEE [7] | 120 | 0,27 | 5,8 | 8370 | 8,3 | 113,1 | 2,3 | 0,6 |
| **12** | 65.6 9 | 26 | [1.31] | UHMWPEF [7] | 60 | 0,27 | 12,2 | 8515 | 11,1 | 125,9 | 2,9 | 0,5 |

The molding compositions of the present invention (Examples 11 and 12) show a good balance between mechanical properties, such as impact resistance and tensile modulus and friction as well as wear properties (which are important especially for automotive applications such as window winding systems or sunroof systems, e.g. pulleys or sliding elements).

## Claims

1. A molding composition comprising
a) polyoxymethylene (A) and
b) hydrophilized ultra high molecular weight polyethylene (B).

2. A molding composition according to claim 1, wherein at least 25 %, preferably at least 50 %, most preferably at least 75% of the terminal groups of the polyoxymethylene (A) are hydroxyl groups, especially hydroxyethylene groups.

3. A molding composition according to at least one of the preceding claims, wherein the polyoxymethylene (A) comprises at least 50 mol-%, preferably at least 70 mol-%, more preferably at least 90 mol-% and most preferably at least 95 mol-% of -CH₂O repeat units.

4. A molding composition according to at least one of the preceding claims, wherein polyoxymethylene (A) is present in an amount up to 97 wt.-%, preferably ranging from 40 to 95 wt.-%, more preferably ranging from 55 to 90 wt.-% or 55 to 85 wt.-%, wherein the weight is based on the total weight of the molding composition.

5. A molding composition according to at least one of the preceding claims, wherein the polyoxymethylene (A) has a content of terminal hydroxyl groups of at least 4 mmol/kg, preferably at least 10 mmol/kg, more preferably at least 15 mmol/kg and most preferably ranging from 15 to 50 mmol/kg, especially 18 to 40 mmol/kg.

6. A molding composition according to at least one of the preceding claims, wherein the polyoxymethylene (A) has a melt volume rate MVR of less than 50 cm³/10 min, preferably ranging from 1 to 20 cm³/10 min, more preferably ranging from 2 to 15 cm³/10 min and especially ranging from 4 to 10 cm³/10 min, determined according to ISO 1133 at 190 °C and 2.16 kg.

7. A molding composition according to at least one of the preceding claims, wherein the hydrophilized ultrahigh molecular weight polyethylene (B) has an average molecular weight of higher than 1.0·10⁶ g/mol, preferably higher than 2.0·10⁶ g/mol, more preferably higher than 4.0·10⁶ g/mol.

8. A molding composition according to at least one of the preceding claims, wherein the hydrophilized ultrahigh molecular weight polyethylene (B) has a viscosity number of higher than 1000 ml/g, more preferably higher than 1500 ml/g, especially ranging from 1800 ml/g to 5000 ml/g, such as ranging from 2000 ml/g to 4300 ml/g (determined according to ISO 1628, part 3; concentration in decahydronaphthalin: 0.0002 g/ml).

9. A molding composition according to at least one of the preceding claims, wherein the hydrophilized ultrahigh molecular weight polyethylene (B) has a mean particle diameter D₅₀ ranging from 1 to 5000 µm, preferably from 10 to 500 µm and particularly preferably from 10 to 150 µm such as 30 to 130 µm and especially from 30 to 90 µm or 90 to 150 µm.

10. A molding composition according to at least one of the preceding claims, wherein the hydrophilized ultrahigh molecular weight polyethylene (B) is present in the molding composition in an amount up to 30 wt.-%, preferably in an amount ranging from 1 to 25 wt.-%, more preferably ranging from 2.5 to 20 wt.-%, especially 4.5 to 15 wt.-%, such as 5.5 to 12 wt.-%, e.g. 6.5 to 9.5 wt.-%, wherein the amount is based on the total weight of the composition.

11. A molding composition according to at least one of the preceding claims, wherein weight ratio of the hydrophilized ultrahigh molecular weight polyethylene (B) to polyoxymethylene (A) ranges from 1:99 to 1:1, preferably 1:50 to 1:3, more preferably 1:40 to 1:4, further preferably 1:30 to 1:5, especially 1:20 to 1:6 or 1:15 to 1:7.

12. A molding composition according to at least one of the preceding claims, wherein the hydrophilized ultrahigh molecular weight polyethylene (B) is obtainable or obtained by a plasma treatment of a ultrahigh molecular weight polyethylene.

13. Method for the manufacturing of molded articles comprising melt mixing the molding composition according to at least one of the preceding claims.

14. Molded article obtainable by the method of claim 13.

15. Use of the molding composition according to one or more of claims 1 to 12 or a molded article according to claim 14 for the manufacturing of molded parts used in the automotive industry or for housings, latches, window winding systems, wiper systems, pulleys, sun roof systems, seat adjustments, levers, gears, claws, pivot housings, wiper arms, brackets or seat rails bearings, gears, cams, rollers, sliding elements such as sliding plates, conveyer belt parts such as chain elements and links, castors, fasteners, levers, conveyor system wear strips and guard rails.
